# EUROPÄISCHE PATENTSCHRIFT

(11) **EP 2 127 574 B1**
(45) Veröffentlichungstag und Bekanntmachung des Hinweises auf die Patenterteilung: **03.08.2011**
(21) Anmeldenummer: 09007059.0
(22) Anmeldetag: 27.05.2009
(51) Int. Cl.: A47J 36/04

(54) **Anordnung zur induktiven Erwärmung von auf Tellern angerichteten Speisen**
Assembly for inductive heating of dishes placed on plates
Agencement de chauffage inductif de plats disposés sur des assiettes

(30) Priorität: 30.05.2008 DE 102008026048; 30.07.2008 DE 102008035686
(43) Veröffentlichungstag der Anmeldung: 02.12.2009
(73) Patentinhaber: HUPFER Metallwerke GmbH & Co. KG, 48853 Coesfeld (DE)
(72) Erfinder: Schumacher, Helmut, Dipl.-Ing., 48653 Coesfeld (DE)
(74) Vertreter: Albrecht, Rainer Harald

(56) Entgegenhaltungen:
- EP-A- 0 688 526
- WO-A-2005/021179
- DE-A1- 10 033 057
- DE-T2- 69 736 003
- DE-U1- 20 015 128
- FR-A- 2 693 093
- US-A1- 2002 073 986

## Beschreibung

Die Erfindung betrifft eine Anordnung zur induktiven Erwärmung von auf Tellern angerichteten Speisen mit
einer Induktionsheizfläche, die mindestens eine von einem hochfrequenten Strom durchflossene Induktionsspule aufweist, und
einem Teller aus Porzellan oder Keramik, an dessen Boden eine elektrisch leitfähige Schicht vorgesehen ist, in der das Magnetfeld der Induktionsspule Wirbelströme erzeugt.

Aus DE 196 17 147 C2 ist ein Teller aus Porzellan oder Keramik bekannt, der bodenseitig eine elektrisch leitende Schicht zum induktiven Erwärmen in einem elektromagnetischen Wechselfeld aufweist. Zur Erreichung eines optimalen Wirkungsgrades der Wirbelstromankopplung müssen die das elektromagnetische Wechselfeld emittierende Wicklung der Induktionsspule und die leitfähige Schicht des Tellers aufeinander abgestimmt ausgebildet sein. Die Schichtdicke der elektrisch leitenden Schicht und/oder deren Zusammensetzung sind variable Einflussgrößen, um die gewünschte Anpassung vorzunehmen. Unter anderem wird vorgeschlagen, die leitfähige Schicht in einer über die Oberfläche des Tellers variierenden Schichtdicke aufzutragen, um auf dem Geschirrteil Bereiche zu schaffen, die unterschiedlich stark erwärmt werden. Diese Maßnahme ist für so mehrgeteilte Teller interessant. Durch einen entsprechenden Schichtauftrag ist die Stärke der Ankopplung an das magnetische Wechselfeld von Abteil zu Abteil des mehrgeteilten Tellers nach Wunsch unterschiedlich und anwendungsbezogen festgelegt.

Aus DE 697 36 003 T2 ist eine Anordnung zur induktiven Erwärmung von auf Tellern angerichteten Speisen mit einer Induktionsheizfläche, die mindestens eine von einem hochfrequenten Strom durchflossene Induktionsspule aufweist, und einem Teller bekannt, der ein induktiv erwärmbares Element in Form eines flächigen Metallgitters als Kern aufweist. Um die Temperatur des erwärmbaren Elementes zu steuern, werden über eine Schaltung Rückkopplungsparameter und damit die Impedanz der Anordnung von Induktionsspule in Verbindung mit dem erwärmbaren Element aufgenommen. Anhand der detektierten Parameter wird das Magnetfeld aufrechterhalten, unterbrochen oder neu erzeugt. Um zusätzlich eine übermäßige Erwärmung zu vermeiden, kann die Curie-Temperatur des erwärmbaren Heizelementes so gewählt werden, dass die Absorptionsfähigkeit des Heizelementes beim Überschreiten einer Nenntemperatur reduziert ist, wodurch eine weitere, übermäßige Erwärmung vermieden wird. Schließlich soll das Heizelement auch in ein Phasen-änderungsmaterial eingebettet sein, um möglichst gut eine vorgegebene Temperatur halten zu können. Sowohl die Auswahl einer geeigneten Curie-Temperatur des Heizelementes als auch die Einbettung in ein Phasen-übergangsmaterial ermöglichen eine gewisse räumliche Angleichung der Temperatur. Die beschriebene Ausgestaltung ist jedoch insgesamt sehr aufwendig und damit kostspielig, wobei auch die Materialauswahl eingeschränkt ist. Schließlich muss die Solltemperatur für jeden Teller im voraus genau festgelegt und kann während der Benutzung nicht wesentlich verändert werden.

Bei Porzellan- oder Keramiktellem, die einen von einem Tellerrand umgebenden Tellerboden mit einer im Wesentlichen ebenen und nicht von Stegen unterbrochenen Auflagefläche für die Speisen aufweisen, ist es üblich, an der Unterseite des Tellerbodens eine elektrisch leitende Schicht flächig oder in einem regelmäßigen Muster zu applizieren, die eine einheitliche Schichtdicke aufweist. Dabei ist eine in radialer Richtung ungleichmäßige Verteilung der meist konzentrisch umlaufenden Wirbelströme festzustellen. Verbunden mit der vergleichsweise schlechten Wärmeleitfähigkeit von Porzellan oder Keramik kommt es zu teilweise deutlichen Temperaturunterschieden der Speisen auf dem Teller, insbesondere wenn durch schnelle Erwärmung der auf dem Teller angerichteten Speisen ein horizontaler Temperaturausgleich in den Speisen nicht schnell genug stattfinden kann. Dies kann zu einem lokalen Anbrand der Speisen bei unzureichender Resttemperatur im Teller führen.

Vor diesem Hintergrund liegt der Erfindung die Aufgabe zugrunde, für die eingangs beschriebene Anordnung einen Teller anzugeben, dessen Auflagefläche für die Speisen durch Induktion gleichmäßig erwärmbar ist.

Ausgehend von einer Anordnung mit den eingangs beschriebenen Merkmalen wird die Aufgabe erfindungsgemäß dadurch gelöst, dass die elektrisch leitende Schicht des Tellerbodens eine zur Induktionsspule, koaxial angeordnete Kemfläche und darum konzentrisch angeordnete Zonen aufweist, deren Breite und Schichtdicke auf das Magnetfeld der Induktionsspule so abgestimmt sind, dass die induzierten Wirbelströme eine Auflagefläche für die Speisen gleichmäßig erwärmen. Eine gleichmäßige Erwärmung im Sinne der Erfindung liegt vor, wenn signifikante Temperaturunterschiede des Tellerbodens, die für die Regenerierung der Speisen relevant sind, im Bereich der Auflagefläche für die Speisen vermieden werden. Zum Vergleich sind die Ergebnisse an einem Tellerboden mit gleichen Abmessungen, an dem eine elektrisch leitende Schicht konstanter Dicke zur Ankopplung des Magnetfeldes vorgesehen ist, heranzuziehen. Erfindungsgemäß ist die elektrisch leitende Schicht hinsichtlich ihrer Geometrie auf die unterschiedlich starken Magnetfelder der Induktionsspule so abgestimmt, dass dort, wo die Induktionsspule die größte Feldstärke führt, das elektrisch leitende Material nur in einer geringen Menge bzw. Schichtstärke vorgesehen ist, und dort, wo die Feldstärke am schwächsten ist, die elektrisch leitende Schicht in einer größeren Schichtstärke angeordnet ist. Dies hat eine gleichmäßigere Hitzeentwicklung der Speisenkomponenten auf der Auflagefläche des Tellers zur Folge. Dadurch kann ein Anbrennen empfindlicher Speisekomponenten, wie z. B. milchhaltiger Speisen oder Soßen, verhindert sowie auch die Abspaltung von Wasser aufgrund lokaler Überhitzung verringert werden. Ferner kann die erfindungsgemäße Abstimmung zwischen Induktionsheizfläche und Teller auch genutzt werden, um die Zeit zur Erwärmung der auf dem Teller angerichteten Speisen zu verkürzen.

Die Auflagefläche für die Speisen kann eine im Wesentlichen ebene und nicht von Stegen unterbrochene Auflagefläche bilden. Dabei ist die Kemfläche zweckmäßig in der Tellermitte angeordnet.

Gemäß einer bevorzugten Ausführung der Erfindung ist die elektrisch leitende Schicht zwischen der Kemfläche und den darum konzentrisch angeordneten Zonen unterbrochen, wobei die Unterbrechung eine Ringfläche bildet, die zweckmäßig eine Breite zwischen 5 und 15 mm aufweist. Durch die erfindungsgemäß vorgesehene ringförmige Unterbrechung zwischen der Kemfläche und den darum konzentrisch angeordneten Zonen können die Wirbelströme im umfangsnahen Bereich des Tellerbodens verstärkt werden. Dieser Effekt ist durch die Breite der nicht leitenden Ringfläche beeinflussbar. Die Anordnung einer nicht leitenden Ringfläche leistet im Rahmen der erfindungsgemäßen Lehre einen wirksamen Beitrag zur Vergleichmäßigung der Wirbelstromverteilung im Bodenbereich des Tellers.

Insbesondere bei großen Tellern ist eine Verstärkung des Bodens in Form eines unterseitig vorstehenden Stegs oder unterseitig vorstehender Vorsprünge zweckmäßig. Die Verstärkung ist erfindungsgemäß im Bereich der elektrisch nicht leitenden Ringfläche angeordnet und bildet zusammen mit einem unterseitig vorstehenden Rand, der den von der elektrisch leitenden Schicht bedeckten Flächenbereich umfasst, die Standfläche des Tellers.

Gemäß einer bevorzugten Ausführung der Erfindung ist die Kernfläche von zumindest zwei Zonen aus einem elektrisch leitenden Material umgeben, wobei die elektrisch leitende Schicht der äußeren Ringzone eine größere Schichtdicke aufweist als die elektrisch leitende Schicht der von der äußeren Ringzone umgebenen innen liegenden Ringzone. Zweckmäßig beträgt die Dicke der elektrisch leitenden Schicht in der äußeren Zone etwa das 1,5 bis 2-fache der elektrisch leitenden Schicht der innen liegende Ringzone, wobei die Dicke der elektrisch leitenden Schicht in der Kemfläche und der dazu benachbarten innen liegenden Ringzone sich entsprechen können.

Eine vorteilhafte Ausführung der erfindungsgemäßen Lehre sieht vor, dass die Kemfläche der elektrisch leitenden Schicht eine Kreisfläche und die konzentrischen Zonen Kreisringflächen bilden sowie an einem kreisförmigen Tellerboden angeordnet sind. Ein an den Tellerboden anschließender Tellerrand kann ebenfalls rund oder ggf. auch mit einer abweichenden Außenkontur ausgebildet sein. Eine bevorzugte Ausgestaltung der elektrisch leitenden Schicht, insbesondere für einen runden Tellerboden mit einem Durchmesser zwischen 160 und 190 mm, ist Gegenstand des Anspruches 10.

Der Teller kann auch eine von der Kreisform abweichende Auflagefläche für die Speisen aufweisen. In diesem Fall haben die elektrisch leitende Kemfläche sowie die um die Kemfläche konzentrisch angeordneten Zonen vorzugsweise eine an die Form der Auflagefläche angepasste Geometrie.

Im Rahmen der Erfindung liegt es schließlich, dass der Teller zumindest zwei voneinander getrennte, durch Induktion gleichmäßig erwärmbare Auflageflächen für Speisen aufweist, denen jeweils eine Induktionsspule zugeordnet ist. Der Boden des Tellers kann unterhalb der Auflageflächen jeweils eine elektrisch leitende Schicht mit einer zur Induktionsspule koaxial angeordneten Kemfläche und darum konzentrisch angeordnete Zonen aufweisen.

Die elektrisch leitende Schicht ist bei allen beschriebenen Ausführungen der Erfindung vorzugsweise an der Unterseite des Tellerbodens appliziert und durch eine Glasur geschützt. Sie kann aus einer Metallfolie bestehen, die zur Variation der Schichtdicke auch mehrlagig appliziert werden kann. Die elektrisch leitende Schicht kann ferner durch Siebdruckverfahren oder Beschichtungsverfahren hergestellt werden. Als Material für die elektrisch leitende Schicht des Tellerbodens kommen vor allem niederohmige Leitermaterialien, beispielsweise Silber, Aluminium, Kupfer und Legierungen mit den vorgenannten Metallen in Betracht, die in sehr dünnen Schichten appliziert werden. Die Schichten können auch Zusätze aus ferromagnetischen Materialien enthalten.

Im Folgenden wird die Erfindung anhand einer lediglich ein Ausführungsbeispiel darstellenden Zeichnung erläutert. Es zeigen schematisch:
- **Fig. 1**: den grundsätzlichen Aufbau einer Anordnung zur induktiven Er- wärmung von auf Tellern angerichteten Speisen,
- **Fig. 2**: einen Schnitt durch einen Teller, der eine erfindungsgemäße Aus- stattung zur induktiven Erwärmung aufweist,
- **Fig. 3**: in einer Explosionsdarstellung den Schichtaufbau einer elektrisch leitenden Schicht an der Unterseite des in Fig. 2 dargestellten Tellers,
- **Fig. 4**: eine Draufsicht auf die Unterseite des in Fig. 2 dargestellten Tellers.

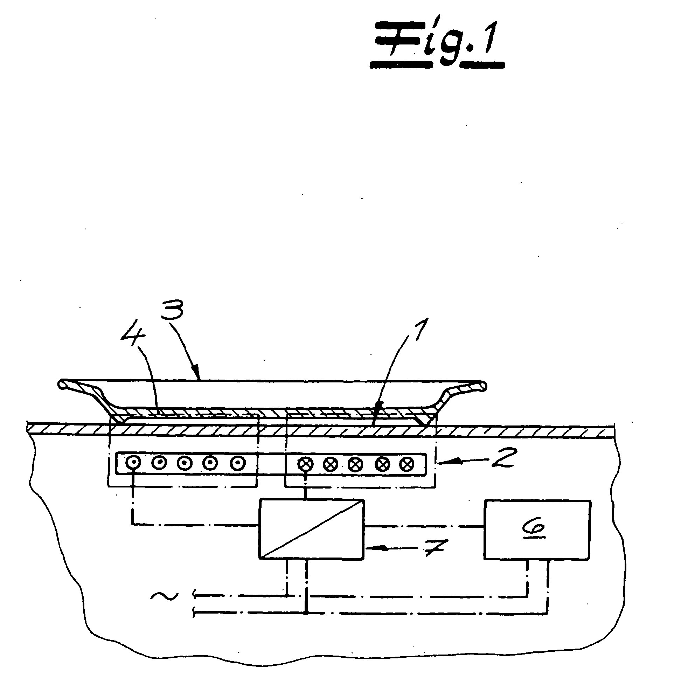

Die in Fig. 1 dargestellte Anordnung umfasst eine Induktionsheizfläche 1, die eine von einem hochfrequenten Strom durchflossene Induktionsspule 2 aufweist, sowie einen Teller 3 aus Porzellan oder Keramik, an dessen Boden 4 eine elektrisch leitfähige Schicht 5 angeordnet ist, in der das Magnetfeld der Induktionsspule 2 Wirbelströme erzeugt. Der Induktionsspule 2 ist in an sich bekannter Weise ein Steuerelement 6 sowie ein Umrichter 7, der die Netzfrequenz in etwa 25 bis 50 kHz umwandelt, zugeordnet. Die zur Wirbelstromankopplung vorgesehene elektrisch leitende Schicht 5 des Tellerbodens besteht zumeist aus einem niederohmigen Leitermaterial, z. B. Silber oder einer Silberlegierung, und weist eine geringe Schichtstärke auf. Die Eindringtiefe ist aufgrund des hochfrequenten Wechselfeldes gering.

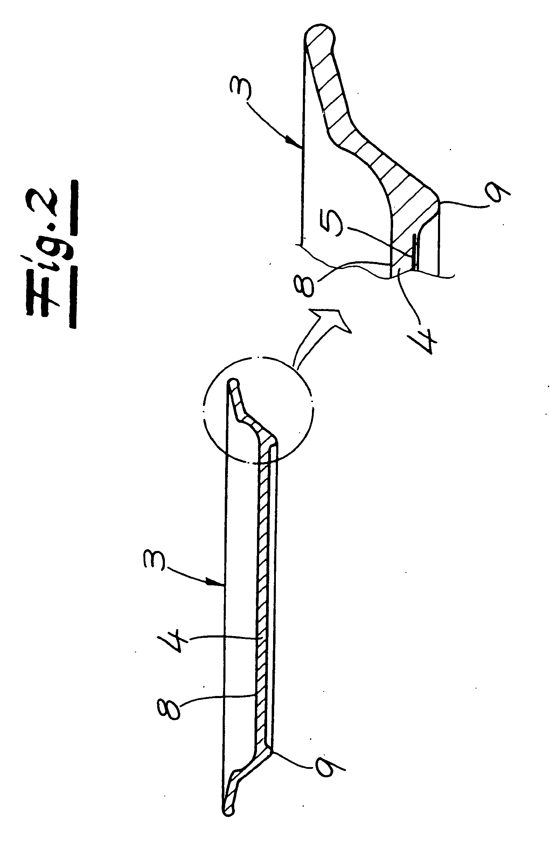

Der in Fig. 2 dargestellte Teller 3 besteht aus Porzellan oder Keramik und weist eine im Wesentlichen ebene und nicht von Stegen unterbrochene Auflagefläche 8 für Speisen auf. Die elektrisch leitende Schicht 5 ist an der Unterseite des Tellerbodens 4 appliziert und durch eine Glasur geschützt. Der von der elektrisch leitenden Schicht 5 bedeckte Flächenbereich wird von einem unterseitig vorstehenden Rand 9, der eine Standfläche des Tellers bildet, umgeben.

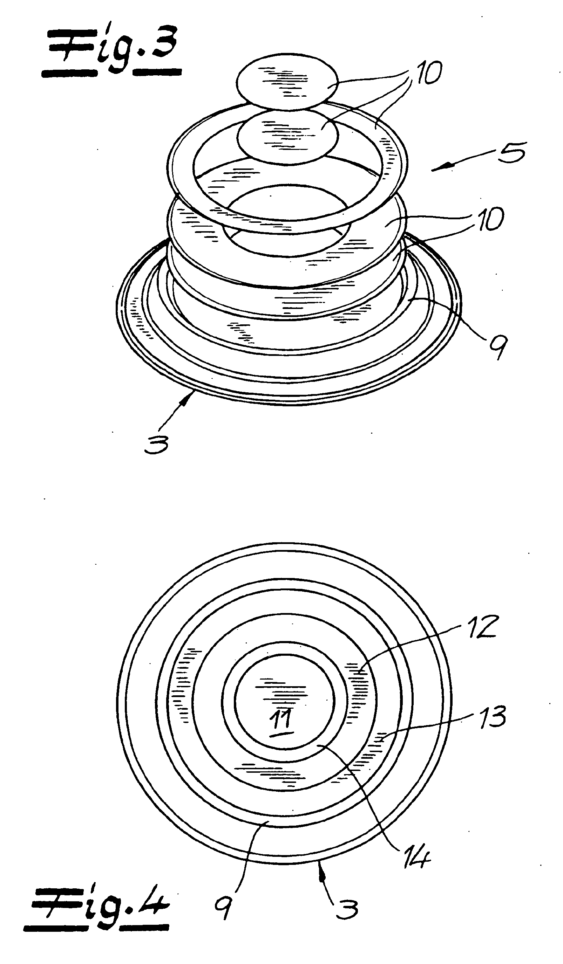

Der Schichtenaufbau der elektrisch leitenden Schicht 5 an der Unterseite des Tellerbodens 4 ist in den Fig. 3 und 4 dargestellt. Die Schicht besteht im Ausführungsbeispiel aus ausgestanzten Metallfolien 10, wobei durch die Zahl der Folienlagen die Schichtdicke variiert wird. Anstelle einer mehrschichtigen Folienanordnung können natürlich auch einlagige Folien eingesetzt werden, die sich hinsichtlich ihrer Schichtdicke unterscheiden. Anstelle von Folien können jedoch auch Beschichtungen oder im Siebdruckverfahren aufgetragene Schichten verwendet werden. Die in den Fig. 3 und 4 abgebildete elektrisch leitende Schicht 5 setzt sich aus einer Kemfläche 11 in der Tellermitte und darum konzentrisch angeordnete ringförmig umlaufenden Zonen 12, 13 zusammen. Die Abmessungen und Schichtdicke der Kemfläche 11 sowie die Breite und Schichtdicke der ringförmig umlaufenden Zonen 12, 13 sind auf das Magnetfeld der Induktionsspule so abgestimmt, dass die induzierten Wirbelströme die Auflagefläche 8 des Tellerbodens 4 gleichmäßig erwärmen. Aus einer vergleichenden Betrachtung der Fig. 3 und 4 wird deutlich, dass die elektrisch leitende Schicht zwischen der Kemfläche 11 und den dazu konzentrisch angeordneten Zonen 12. 13 unterbrochen ist, wobei die Unterbrechung eine Ringfläche 14 bildet. Diese weist eine Breite zwischen 5 und 15 mm auf. Des weiteren entnimmt man der Fig. 3, dass die Kemfläche 11 von zwei Zonen 12, 13 umgeben ist, wobei die elektrisch leitende Schicht der äußeren Ringzone 13 eine größere Schichtdicke aufweist als die elektrisch leitende Schicht der von der äußeren Ringzone umgebenen innen liegenden Ringzone 12. Im Ausführungsbeispiel ist in der äußeren Ringzone die elektrisch leitende Folie dreilagig und in der innen liegenden Ringzone zweilagig angeordnet, so dass sich ein Dickenverhältniss von 1,5 ergibt. Die Dicke der elektrisch leitenden Schichten in der Kernfläche 11 und der dazu benachbarten innen liegenden Ringzone 12 entsprechen sich. Im Ausführungsbeispiel bestehen die Kemfläche 11 und die dazu benachbarte innen liegende Ringzone 12 jeweils aus einer zweilagig aufgebrachten Metallfolie 10.

### 1. Ausführungsbeispiel:

Zugrunde liegt ein runder Teller mit einem am äußeren Tellerrand gemessenen Durchmesser von 260 mm, der einen Tellerboden mit einem Nenndurchmesser von 187 mm aufweist. Die an der Unterseite des Bodens vorgesehene elektrisch leitende Schicht zur Ankopplung an das Magnetfeld einer Induktionsspule besteht aus Metallfolien, die entsprechend der Darstellung in Fig. 3 mehrlagig aufkaschiert sind. Die Kemfläche 11 in der Tellermitte und die konzentrisch angeordneten ringförmig umlaufenden Zonen 12, 13 werden durch Folienzuschnitte gebildet, die folgende Abmessungen aufweisen:

### Kernfläche 11: Durchmesser 75 mm

Innen liegende Ringzone 2: Innendurchmesser 95 mm

Äußere Ringzone 13: Innendurchmesser 140 mm, Außendurchmesser 178 mm.

### 2. Ausführungsbeispiel:

Zugrunde liegt ein runder Teller am äußeren Tellerrand gemessenen Durchmesser von 240 mm, der einen Tellerboden mit einem Nenndurchmesser von 168 mm aufweist. Die an der Unterseite des Bodens vorgesehene elektrisch leitende Schicht zur Ankopplung an das Magnetfeld einer Induktionsspule besteht aus Metallfolien, die entsprechend der Darstellung in Fig. 3 mehrlagig aufkaschiert sind. Die Kemfläche 11 in der Tellermitte und die konzentrisch angeordneten ringförmig umlaufenden Zonen 12. 13 werden durch Folienzuschnitte bildet, die folgende Abmessungen aufweisen:

### Kemfläche 11: Durchmesser 75 mm

Innen liegende Ringzone 12: mit einem Innendurchmesser 95 mm

Äußere Ringzone 13: Innendurchmesser von 125 mm; einem Außendurchmesser von 160 mm.

## Patentansprüche

1. Anordnung zur induktiven Erwärmung von auf Tellern angerichteten Speisen mit
einer Induktionsheizfläche (1), die mindestens eine von einem hochfrequenten Strom durchflossene Induktionsspule (2) aufweist, und
einem Teller (3) aus Porzellan oder Keramik, an dessen Boden (4) eine elektrisch leitfähige Schicht (5) vorgesehen ist, in der das Magnetfeld der Induktionsspule (2) Wirbelströme erzeugt,
**dadurch gekennzeichnet, dass** die elektrisch leitende Schicht (5) eine zur Induktionsspule koaxial angeordnete Kemfläche (11) und darum konzentrisch angeordnete Zonen (12, 13) aufweist, deren Breite und Schichtdicke auf das Magnetfeld der Induktionsspule (2) so abgestimmt sind, dass die induzierten Wirbelströme eine Auflagefläche (8) für die Speisen gleichmäßig erwärmen.

2. Anordnung nach Anspruch 1, **dadurch gekennzeichnet, dass** die Kemfläche (11) in der Tellermitte angeordnet ist und dass die Auflagefläche (8) für die Speisen eine im Wesentlichen ebene und nicht von Stegen unterbrochene Fläche bildet.

3. Anordnung nach Anspruch 1 oder 2, **dadurch gekennzeichnet, dass** die elektrisch leitende Schicht (5) zwischen der Kernfläche (11) und den darum konzentrisch angeordneten Zonen (12, 13) unterbrochen ist, wobei die Unterbrechung eine Ringfläche (14) bildet.

4. Anordnung nach Anspruch 3, **dadurch gekennzeichnet, dass** die Ringfläche (14) eine Breite zwischen 5 mm und 15 mm aufweist.

5. Anordnung nach Anspruch 3 oder 4, **dadurch gekennzeichnet, dass** der Boden (4) des Tellers eine Verstärkung in Form eines unterseitig vorstehenden Stegs oder unterseitig vorstehender Vorsprünge aufweist, wobei die Verstärkung im Bereich der elektrisch nicht leitenden Ringfläche (14) angeordnet und zusammen mit einem unterseitig vorstehenden Rand (9), der den von der elektrisch leitenden Schicht (5) bedeckten Flächenbereich einfasst, eine Standfläche des Tellers (3) bildet.

6. Anordnung nach einem der Ansprüche 1 bis 5, **dadurch gekennzeichnet, dass** die Kemfläche (11) von zumindest zwei Zonen (12, 13) aus einem elektrisch leitenden Material umgeben sind, wobei die elektrisch leitende Schicht der äußeren Ringzone (13) eine größere Schichtdicke aufweist als die elektrisch leitende Schicht der von der äußeren Ringzone umgebenen innen liegende Ringzone (12).

7. Anordnung nach Anspruch 6, **dadurch gekennzeichnet, dass** die Dicke der elektrisch leitenden Schicht (5) in der äußeren Ringzone (13) das 1,5 bis 2-fache der elektrisch leitenden Schicht der innen liegenden Ringzone ist.

8. Anordnung nach Anspruch 6 oder 7, **dadurch gekennzeichnet, dass** die Dicke der elektrisch leitenden Schichten in der Kemfläche (11) und der dazu benachbarten innen liegenden Ringzone (12) sich entsprechen.

9. Anordnung nach einem der Ansprüche 6 bis 8, **dadurch gekennzeichnet, dass** die Kernfläche (11) der elektrisch leitenden Schicht eine Kreisfläche und die konzentrischen Zonen (12, 13) Kreisringflächen bilden sowie auf einem kreisförmigen Tellerboden (4) angeordnet sind.

10. Anordnung nach Anspruch 9, **dadurch gekennzeichnet, dass** die Kemfläche (11) der an dem Tellerboden (4) vorgesehenen elektrisch leitenden Schicht (5) einen Durchmesser von 70 mm bis 80 mm aufweist und von einer 5 mm bis 15 mm breiten nicht leitenden Ringfläche (14) umgeben ist und dass die nicht leitende Ringfläche (14) von zwei elektrisch leitenden ringförmigen Zonen (12, 13) umgeben ist, wobei die äußere Ringzone (12, 13) eine Breite zwischen 15 mm und 20 mm aufweist.

11. Anordnung nach einem der Ansprüche 1 bis 8, **dadurch gekennzeichnet, dass** der Teller (3) eine von der Kreisform abweichende Auflagefläche (8) für die Speisen aufweist und dass die elektrisch leitende Kemfläche (11) sowie die um die Kemfläche konzentrisch angeordneten Zonen (12, 13) eine an die Form der Auflagefläche (8) angepasste Geometrie aufweisen.

12. Anordnung nach Anspruch 1, **dadurch gekennzeichnet, dass** der Teller zumindest zwei voneinander getrennte, durch Induktion gleichmäßig erwärmbare Auflageflächen (8) für Speisen aufweist, wobei den Auflageflächen jeweils eine Induktionsspule (2) zugeordnet ist und dass der Boden (4) des Tellers unterhalb der Auflageflächen jeweils eine elektrisch leitende Schicht (5) mit einer zur Induktionsspule (2) koaxial angeordneten Kernfläche (11) und darum konzentrisch angeordnete Zonen (12, 13) aufweist.

13. Anordnung nach einem der Ansprüche 1 bis 12, **dadurch gekennzeichnet, dass** die elektrisch leitende Schicht an der Unterseite des Tellerbodens appliziert und durch eine Glasur geschützt ist.

## Claims

1. An assembly for the inductive heating of food served on plates with
an induction heating surface (1), which exhibits an induction coil (2) with a high-frequency current flowing through it and
a plate (3) made from porcelain or ceramic, the base (4) of which is provided with an electrically conductive layer (5), in which the magnetic field of the induction coil (2) produces eddy currents,
**characterised in that** the electrically conductive layer (5) exhibits a core surface (11) disposed coaxially to the induction coil and zones (12, 13) disposed coaxially around said surface, the width and layer thickness of said zones being adjusted to the magnetic field of the induction coil (2) in such a way that the induced eddy currents evenly heat a supporting surface (8) for the food.

2. The assembly according to claim 1, **characterised in that** the core surface (11) is disposed in the centre of the plate and that the supporting surface (8) for the food forms an essentially level surface not interrupted by strip.

3. The assembly according to claim 1 or 2, **characterised in that** the electrically conductive layer (5) between the core surface (11) and the zones (12, 13) disposed concentrically around it is interrupted, wherein the interruption forms a ring surface (14).

4. The assembly according to claim 3, **characterised in that** the ring surface (14) exhibits a width of between 5 mm and 15 mm.

5. The assembly according to claim 3 or 4, **characterised in that** the base (4) of the plate exhibits a reinforcement in the form of a strip projecting on the underside or projections extending on the underside, wherein the reinforcement is disposed in the area of the electrically non-conductive ring surface (14) and forms a standing base for the plate (3) together with an edge (9) projecting on the underside, which surrounds the surface area covered by the electrically conductive layer (5).

6. The assembly according to one of the claims 1 to 5, **characterised in that** the core surface (11) is surrounded by at least two zones (12, 13) of an electrically conductive material, wherein the electrically conductive layer of the outer ring zone (13) exhibits a greater layer thickness than the electrically conductive layer of the inner ring zone (12) surrounded by the outer ring zone.

7. The assembly according to claim 6, **characterised in that** the thickness of the electrically conductive layer (5) in the outer ring zone (13) is 1.5 to 2 times the electrically conductive layer of the inner ring zone.

8. The assembly according to claim 6 or 7, **characterised in that** the thickness of the electrically conductive layers in the core surface (11) and of the adjacent inner ring zone (12) correspond to one another.

9. The assembly according to one of the claims 6 to 8, **characterised in that** the core surface (11) of the electrically conductive layer forms a circular surface and the concentric zones (12, 13) form circular ring surfaces and are also disposed on a circular plate base (4).

10. The assembly according to claim 9, **characterised in that** the core surface (11) of the electrically conductive layer (5) provided on the base of the plate (4) has a diameter of 70 mm to 80 mm and is surrounded by a 5 mm to 15 mm wide non-conductive ring surface (14) and that the non-conductive ring surface (14) is surrounded by two electrically conductive ring-shaped zones (12, 13), wherein the outer ring zone (12, 13) exhibits a width of between 15 mm and 20 mm.

11. The assembly according to one of the claims 1 to 8, **characterised in that** the plate (3) exhibits a support surface (8) for the food that deviates from the circular form and that the electrically conductive core surface (11) and also the zones (12, 13) disposed concentrically around the core surface exhibit a geometry adapted to the shape of the supporting surface (8).

12. The assembly according to claim 1, **characterised in that** the plate exhibits at least two support surfaces (8) for food that are separate from one another and can be evenly heated by induction, wherein the support surfaces are each assigned an induction coil (2), and that the base (4) of the plate beneath the support surfaces exhibits an electrically conductive layer (5) with a core surface (11) disposed coaxially to the induction coil (2) and zones (12, 13) disposed around it concentrically.

13. The assembly according to claims 1 to 12, **characterised in that** the electrically conductive layer is applied to the underside of the plate base and is protected by a glaze.

## Revendications

1. Système pour le réchauffement inductif de plats préparés sur des assiettes, avec
une surface de chauffage par induction (1) comportant au moins une bobine d'induction (2) parcourue par un courant haute fréquence, et
une assiette (3) en porcelaine ou en céramique, au fond (4) de laquelle est prévue une couche électriquement conductrice (5), dans laquelle le champ magnétique de la bobine d'induction (2) produit des courants de Foucault,
**caractérisé en ce que** la couche électriquement conductrice (5) comporte une surface centrale (11) disposée coaxialement à la bobine d'induction, ainsi que des zones (12, 13) disposées concentriquement autour de celle-ci, dont la largeur et l'épaisseur de couche sont déterminées en fonction du champ magnétique de la bobine d'induction (2), si bien que les courants de Foucault induits réchauffent uniformément une surface d'appui (8) destinée aux plats.

2. Système selon la revendication 1, **caractérisé en ce que** la surface centrale (11) est disposée au centre de l'assiette, et **en ce que** la surface d'appui (8) destinée aux plats forme une surface essentiellement plane et non interrompue par des nervures.

3. Système selon la revendication 1 ou 2, **caractérisé en ce que** la couche électriquement conductrice (5) est interrompue entre la surface centrale (11) et les zones (12, 13) disposées concentriquement autour de celle-ci, l'interruption formant une surface annulaire (14).

4. Système selon la revendication 3, **caractérisé en ce que** la surface annulaire (14) présente une largeur de 5 mm à 15 mm.

5. Système selon la revendication 3 ou 4, **caractérisé en ce que** le fond (4) de l'assiette comporte un renfort sous la forme d'une nervure faisant saillie du côté inférieur ou de saillies dépassant du côté inférieur, le renfort étant disposé dans la région de la surface annulaire (14) électriquement non-conductrice, et formant une surface de pose de l'assiette (3), ensemble avec un bord (9) faisant saillie du côté inférieur, qui entoure une zone de surface recouverte de la couche électriquement conductrice (5).

6. Système selon l'une des revendications 1 à 5, **caractérisé en ce que** la surface centrale (11) est entourée d'au moins deux zones (12, 13) constituées d'un matériau électriquement conducteur, la couche électriquement conductrice (5) de la zone annulaire externe (13) présentant une épaisseur de couche supérieure à celle de la couche électriquement conductrice (5) de la zone annulaire interne (12) encerclée par la zone annulaire externe.

7. Système selon la revendication 6, **caractérisé en ce que** l'épaisseur de la couche électriquement conductrice (5) dans la zone annulaire externe (13) est 1,5 à 2 fois supérieure à celle de la couche électriquement conductrice (5) de la zone annulaire interne.

8. Système selon la revendication 6 ou 7, **caractérisé en ce que** l'épaisseur de la couche électriquement conductrice (5) dans la surface centrale (11) et la zone annulaire interne (12) adjacente se correspondent.

9. Système selon l'une des revendications 6 à 8, **caractérisé en ce que** la surface centrale (11) de la couche électriquement conductrice (5) forme une surface circulaire et les zones concentriques (12, 13) forment des surfaces annulaires circulaires et sont disposées sur un fond d'assiette (4) circulaire.

10. Système selon la revendication 9, **caractérisé en ce que** la surface centrale (11) de la couche électriquement conductrice (5) prévue au fond (4) de l'assiette présente un diamètre de 70 mm à 80 mm, et est encerclée par une surface annulaire (14) non-conductrice, d'une largeur de 5 mm à 15 mm, et **en ce que** la surface annulaire (14) non-conductrice est encerclée par deux zones annulaires (12, 13) électriquement conductrices, la zone annulaire externe (12, 13) présentant une largeur de 15 mm à 20 mm.

11. Système selon l'une des revendications 1 à 8, **caractérisé en ce que** l'assiette (3) comporte une surface d'appui (8), différente de la forme circulaire et destinée à des plats, et **en ce que** la surface centrale (11) électriquement conductrice ainsi que les zones (12, 13) disposées concentriquement autour de la surface centrale présentent une géométrie adaptée à la forme de la surface d'appui (8).

12. Système selon la revendication 1, **caractérisé en ce que** l'assiette comporte au moins deux surfaces d'appui (8) pour plats séparées l'une de l'autre, aptes à être chauffées uniformément par induction, une bobine d'induction (2) étant attribuée respectivement à chacune des surfaces d'appui, et **en ce que** le fond (4) de l'assiette comporte, en-dessous de chacune des surfaces d'appui, une couche électriquement conductrice (5) avec une surface centrale (11) disposée coaxialement à la bobine d'induction (2), et des zones (12, 13) disposées concentriquement autour de celle-ci.

13. Système selon l'une des revendications 1 à 12, **caractérisé en ce que** la couche électriquement conductrice est appliquée du côté inférieur du fond d'assiette, et protégée par un vernis.
